# FASCICULE DE BREVET EUROPEEN

(11) **EP 3 022 719 B1**
(45) Date de publication et mention de la délivrance du brevet: **22.02.2017**
(21) Numéro de dépôt: 14750524.2
(22) Date de dépôt: 16.06.2014
(51) Int. Cl.: G08B 13/08

(54) **DISPOSITIF DOMOTIQUE DE SUIVI DU DÉPLACEMENT D'UN BATTANT PIVOTANT ET PROCÉDÉ DE FIABILISATION D'UN TEL DISPOSITIF**
HEIMAUTOMATISIERUNGSVORRICHTUNG ZUR ÜBERWACHUNG DER BEWEGUNG EINES SCHWINGENDEN FLÜGELS UND VERFAHREN ZUR ERHÖHUNG DER ZUVERLÄSSIGKEIT SOLCH EINER VORRICHTUNG
HOME AUTOMATION DEVICE FOR MONITORING THE MOVEMENT OF A SWINGING WING AND METHOD FOR ENHANCING THE RELIABILITY OF SUCH A DEVICE

(30) Priorité: 17.07.2013 FR 1357028
(43) Date de publication de la demande: 25.05.2016
(73) Titulaire: Myfox, 31670 Labège (FR)
(72) Inventeur: PRUNET, Jean-Marc, F-75007 Paris (FR); FOURNIOLS, Jean-Yves, F-31130 Quint Fonsegrives (FR)
(74) Mandataire: Cabinet BARRE LAFORGUE & associés
(86) Numéro de dépôt international: PCT/FR2014/051475
(87) Numéro de publication internationale: WO 2015/007969

(56) Documents cités:
- DE-A1-102008 022 276
- JP-A- 2006 241 972
- US-A1- 2010 019 902
- US-A1- 2013 000 406
- US-B1- 6 310 549

## Description

L'invention concerne un dispositif domotique permettant de détecter le déplacement d'un battant par rapport à un dormant fixe dans le référentiel terrestre de façon fiable. L'invention permet notamment un suivi de la position d'un ouvrant battant.

La surveillance du déplacement d'un battant, c'est-à-dire la surveillance de sa position et/ou son mouvement et/ou son accélération (y compris des chocs), est essentielle dans un dispositif de domotique, et notamment dans un dispositif d'alarme contre les intrusions et les effractions. On souhaite plus particulièrement être informé de la position et/ou du déplacement d'un battant par rapport à son orientation de référence - généralement une position fermée sur un dormant.

On connaît des systèmes d'alarme tels que proposés par US 6,940,405 qui allient un capteur de champ magnétique à un capteur inertiel.

Le document US2010019902 divulgue aussi un système d'alarme comprenant un dispositif en accord avec le préambule des revendications 1 et 9.

Ainsi, le déplacement d'un objet pivotant peut être détecté soit par détection d'une accélération instantanée de l'objet correspondant à une ouverture et/ou à des chocs, soit, en l'absence de détection d'une accélération anormale par le capteur inertiel (c'est-à-dire en présence d'un déplacement lent de l'objet), en détectant un changement d'orientation de l'objet grâce au capteur de champ magnétique.

Cependant de tels dispositifs connus ne permettent pas de connaître la position instantanée d'un ouvrant battant par rapport à un dormant. En effet, les capteurs de champ magnétique sont généralement peu fiables et sont influencés par de nombreux champs magnétiques parasites. Un tel capteur présente en outre des imprécisions importantes qui entraînent des déviations dans le temps sur le repérage de la position du battant et empêchent d'en déterminer la position instantanée. Or une telle information peut se révéler utile dans de multiples applications.

Elle peut être obtenue par des capteurs plus complexes et aussi beaucoup plus coûteux et volumineux. Cependant, de tels détecteurs ne sont donc pas adaptés à un dispositif domotique dans lequel les détecteurs doivent être les plus discrets et légers possibles, tout en restant de coût raisonnable et à basse consommation énergétique pour être autonome.

L'invention vise donc à pallier ces inconvénients.

L'invention vise à proposer un dispositif domotique permettant de déterminer de façon fiable si un battant surveillé est déplacé ou a été déplacé par rapport à une orientation de référence.

L'invention vise notamment à proposer un dispositif domotique permettant de déterminer si un battant est ouvert ou fermé.

L'invention vise également à proposer un tel dispositif qui soit peu volumineux, peu coûteux, et malgré tout fiable.

L'invention vise à proposer un dispositif peu gourmand en énergie, et qui soit donc autonome énergétiquement.

L'invention, vise en outre à proposer un dispositif pouvant surveiller une pluralité d'ouvrants battants, dans tous types de lieux.

L'invention vise aussi un procédé de fiabilisation d'un dispositif domotique conforme à l'invention.

L'invention concerne donc un dispositif domotique comprenant :
- au moins un détecteur de déplacement d'un battant mobile en rotation autour d'un axe par rapport à un dormant fixe dans un référentiel terrestre, ledit détecteur de déplacement comprenant :
   - un boîtier adapté pour pouvoir être solidarisé au battant,
   - un accéléromètre fixé au boîtier et adapté pour fournir des signaux, dits signaux d'accélération, représentatifs de l'accélération du boîtier selon au moins une direction fixe du boîtier par rapport au dormant,
   - un magnétomètre fixé au boîtier et adapté pour fournir des signaux, dits signaux d'orientation, représentatifs de l'orientation instantanée d'au moins une direction fixe du boîtier par rapport à un champ magnétique terrestre local,
- une unité de traitement des signaux fournis par l'accéléromètre et par le magnétomètre,
caractérisé en ce que :
- l'unité de traitement comprend au moins une mémoire et est adaptée pour y stocker des données, dites données d'orientation de référence, représentatives d'une valeur d'orientation, dite orientation de référence, prédéterminée du boîtier par rapport au champ magnétique terrestre local,
- l'unité de traitement est adaptée pour pouvoir identifier un événement, dit événement de référence, prédéterminé au moins à partir des signaux d'accélération,
- l'unité de traitement est adaptée pour, sur détection d'un événement de référence, remplacer les données d'orientation de référence par des données représentatives de l'orientation instantanée du boîtier.

Ainsi, l'orientation instantanée du boîtier à la survenue de l'événement de référence devient la nouvelle orientation de référence.

L'invention permet donc de réinitialiser l'orientation instantanée du détecteur de déplacement. Ainsi, si l'orientation fournie par le magnétomètre varie au cours du temps ou si le calcul effectué à partir des signaux délivrés par le magnétomètre et permettant d'obtenir l'orientation instantanée du boîtier accumule des erreurs au cours du temps - notamment au cours de déplacements successifs du battant surveillé sur lequel le détecteur de déplacement est monté - l'orientation de référence est réinitialisée sur détection d'un événement prédéterminé connu. Si un tel événement prédéterminé survient régulièrement par rapport au nombre de déplacements du battant surveillé, la mesure de l'orientation instantanée du battant est relativement exacte car elle est régulièrement réinitialisée à une valeur certaine.

On choisit avantageusement un événement prédéterminé correspondant à la fermeture du battant sur son dormant. En effet, la position fermée sur un dormant est une position exacte connue et fixe dans le temps de la porte par rapport à un dormant. De plus, notamment dans un système de surveillance, on souhaite connaître la position de chaque battant par rapport à sa position fermée. Grâce à un détecteur selon l'invention, on peut mesurer l'orientation du battant par rapport au dormant et réinitialiser son orientation de référence par détection de sa fermeture sur le dormant.

Ainsi, l'invention permet d'obtenir, pour la première fois, un détecteur à la fois fiable, peu coûteux et peu volumineux. En effet, l'invention permet d'utiliser un magnétomètre de qualité moyenne et dont les mesures d'orientation dévient au cours du temps et/ou au cours de déplacements successifs, tout en obtenant des résultats suffisant pour un dispositif domotique, notamment de surveillance passive (sécurité des personnes par exemple), de surveillance active (sécurité des biens par un système d'alarme par exemple), de pilotage d'objets électrodomestiques, de gestion d'énergie et de conditionnement d'air, de communication entre appareils et utilisateur(s), de gestion de la dépendance, etc.

L'invention permet notamment d'utiliser un magnétomètre tout en surmontant les problèmes de détection liés à des variations minimes ou extrêmes d'orientation du champ magnétique terrestre local. Il permet notamment d'utiliser un magnétomètre pour détecter l'orientation d'un battant malgré les variations du champ magnétique terrestre local induites par des sources de parasites électromagnétiques telles que des masses métalliques, des appareils électroménagers, des circuits électriques, des aimants, etc.

L'invention propose donc un dispositif domotique permettant de connaître l'orientation instantanée d'un battant. Une telle information peut se révéler très utile par exemple, dans un système d'alarme, lors de l'activation d'un mode actif de surveillance. L'invention permet ainsi de détecter qu'un battant (porte ou fenêtre) est resté ouvert lors de l'activation du système d'alarme.

Ainsi l'invention permet non seulement de détecter le déplacement lent d'un battant surveillé, mais aussi d'en connaître l'orientation instantanée de façon fiable - ou tout au moins l'état ouvert ou fermé.

Grâce à la combinaison d'un accéléromètre et d'un magnétomètre, un détecteur selon l'invention permet de détecter efficacement tout type d'effraction ou de vol. En effet, l'accéléromètre ne permet pas de détecter (ou mal) les déplacements lents mais permet de détecter efficacement les déplacements rapides et les chocs. Au contraire, bien que les chocs et les variations brutales détectées par l'intermédiaire du magnétomètre soient filtrés pour des raisons techniques, celui-ci permet une détection efficace des variations lentes d'orientation.

Avantageusement et selon l'invention, l'unité de traitement est adaptée pour pouvoir identifier un événement de référence prédéterminé à partir des signaux d'accélération et des signaux d'orientation.

À cet effet, l'unité de traitement est programmable et comprend avantageusement des moyens de traitement de données numériques (un microprocesseur ou un microcontrôleur par exemple) et des moyens de stockage d'instructions sous forme de données numériques (par exemple une mémoire morte). L'unité de traitement est notamment un dispositif informatique de traitement des données numériques.

Plus particulièrement, l'unité de traitement est programmée pour effectuer des opérations - notamment des comparaisons - à partir des signaux qui lui sont fournis et de valeurs mémorisées dans une mémoire, opérations qui correspondent par leur nature et leur suite logique à l'identification d'un événement de référence prédéterminé.

L'unité de traitement est notamment programmée pour effectuer des opérations sur les normes angulaires et les normes d'énergie de déplacement correspondant aux signaux qu'elle reçoit.

Ainsi, le retour à une position prédéterminée est avantageusement détecté par l'unité de traitement lorsque des données représentatives d'un choc lui sont fournies par l'accéléromètre (correspondant à une fermeture sur un dormant). Cependant, un tel choc peut parfois survenir en des orientations éloignées de l'orientation de référence : par exemple dans le cas d'une porte en position ouverte contre un bloque-porte.

Bien qu'éventuellement imprécises, les mesures d'orientation fournies par le magnétomètre permettent à l'unité de traitement de sélectionner les événements détectés à partir des signaux de l'accéléromètre. Ainsi, par exemple, la détection d'un choc sur une porte en dehors d'un intervalle prédéterminé de valeurs d'orientation situé autour de l'orientation de référence ne peut pas être due à la fermeture de la porte.

C'est pourquoi, avantageusement et selon l'invention, dans un premier mode de réalisation, l'unité de traitement est adaptée pour pouvoir identifier un événement de référence dans lequel :
- une énergie d'accélération du détecteur de déplacement est supérieure à une valeur d'énergie prédéterminée, et
- les signaux d'orientation sont représentatifs d'une orientation instantanée du détecteur qui est, en valeur absolue, comprise dans un intervalle prédéterminé d'orientations comprenant au moins l'orientation de référence.

L'énergie d'accélération est déterminée par l'unité de traitement à partir des signaux d'accélération délivrés par l'accéléromètre.

La valeur d'énergie prédéterminée et l'intervalle prédéterminé d'orientations sont mémorisés sous forme de données numériques dans une mémoire.

L'unité de traitement est ainsi adaptée pour pouvoir détecter la survenue d'un événement particulier donnant lieu à un choc pour des orientations du battant proches de son orientation de référence par rapport à un dormant. Seuls les chocs d'un battant sur son dormant qui ne peuvent se produire que dans un intervalle d'incertitude autour de l'orientation de référence sont ainsi sélectionnés par l'unité de traitement dans le cadre de la réinitialisation de ladite orientation de référence.

Avantageusement, dans ce premier mode de réalisation, un événement de référence correspond à :
- une accélération du boîtier dudit détecteur correspondant à un choc transmis audit boîtier, et
- une orientation du détecteur comprise dans un intervalle prédéterminé d'orientations de 2° à 5° autour de l'orientation de référence.

La valeur d'énergie prédéterminée est une valeur de seuil mémorisée. En pratique, l'unité de traitement calcule avantageusement une valeur d'énergie d'un déplacement à partir des signaux d'accélération fournis par l'accéléromètre, et compare cette valeur d'énergie à une valeur de seuil d'énergie enregistrée en mémoire.

La valeur de seuil d'énergie peut être adaptée en fonction du type de battant et du type d'événement de référence attendu pour chaque battant. La valeur seuil d'énergie peut alternativement ou en combinaison être mémorisée dans une mémoire d'un dispositif selon l'invention dès sa première programmation après fabrication.

Avantageusement et selon l'invention, l'intervalle prédéterminé d'orientations est au maximum de 5° autour de l'orientation de référence, notamment il est avantageusement de 2°.

Des bornes de l'intervalle prédéterminé d'orientations sont calculées et/ou mémorisées en fonction de l'orientation de référence. Par exemple les bornes inférieure et supérieure sont calculées respectivement par soustraction et addition d'une valeur mémorisée à l'orientation de référence. En pratique une seule borne est calculée lorsque le battant s'ouvre d'un seul côté d'un dormant.

Dans un second mode de réalisation, alternatif ou combiné au premier mode de réalisation, avantageusement et selon l'invention, l'unité de traitement est adaptée pour pouvoir identifier un événement de référence dans lequel :
- les signaux d'orientation sont représentatifs d'une première variation d'orientation instantanée du détecteur de déplacement de grande amplitude dans un premier sens, puis
- les signaux d'orientation sont représentatifs d'une deuxième variation d'orientation instantanée du détecteur de déplacement de grande amplitude dans un deuxième sens opposé au premier sens, puis
- une énergie d'accélération du détecteur de déplacement est supérieure à une valeur d'énergie prédéterminée.

Un tel scénario correspond à une ouverture puis à une fermeture complète caractérisée d'un battant par rapport à un dormant. De tels critères pour la détection d'un événement de référence sont donc particulièrement fiables et permettent de réinitialiser l'orientation de référence du détecteur (donc du battant) de façon fiable.

Avantageusement, un dispositif selon l'invention est aussi caractérisé en ce que l'accéléromètre est un accéléromètre trois axes adapté pour fournir, en tant que signaux d'accélération, des données représentatives de mesures d'accélérations instantanées du boîtier dans un référentiel terrestre. Notamment l'accéléromètre ou l'unité de traitement des signaux de l'accéléromètre corrigent l'influence de l'accélération de la gravité terrestre.

Plus particulièrement, l'accéléromètre est un accéléromètre trois axes adapté pour fournir, en tant que signaux d'accélération, des données représentatives de mesures d'accélérations instantanées d'un battant auquel le boîtier peut être fixé.

Avantageusement et selon l'invention, le magnétomètre est un magnétomètre trois axes adapté pour fournir des signaux d'orientation représentatifs de l'orientation instantanée de trois directions fixes du boîtier par rapport à la direction du nord magnétique terrestre.

Un magnétomètre trois axes permet de détecter l'orientation d'un battant pivotant autour d'un axe quelconque d'un référentiel terrestre. Un tel magnétomètre permet de détecter l'orientation d'un battant par rapport au nord magnétique terrestre, plus précisément par rapport au nord magnétique terrestre local qui peut être légèrement différent du nord magnétique terrestre à cause de perturbations locales du champ magnétique. Un tel capteur est particulièrement adapté pour des battants montés rotatifs autour d'un axe vertical. Cependant, il permet aussi de détecter l'orientation d'un battant pivotant autour d'un axe horizontal par rapport à un dormant, ou autour d'un axe incliné quelconque par rapport à un dormant.

Le traitement des signaux d'orientation du magnétomètre indiquant l'orientation du boîtier du détecteur de déplacement par rapport au champ magnétique terrestre local permet de déduire la position angulaire d'un battant sur lequel ledit boîtier est fixé par rapport à une position angulaire de référence connue qui correspond à une orientation mémorisée du battant par rapport au champ magnétique terrestre local.

De plus, le magnétomètre est avantageusement un magnétomètre miniature, par exemple du type circuit intégré magnétométrique. De même, l'accéléromètre est avantageusement miniaturisé.

Avantageusement et selon l'invention, le boîtier du détecteur de déplacement comprend des moyens de fixation sur un battant. Les moyens de fixation sont notamment adaptés pour que le détecteur puisse être monté entièrement solidaire du battant- c'est-à-dire fixe par rapport au battant - de façon à pouvoir détecter des accélérations et des changements d'orientation du battant.

Les moyens de fixation du boîtier sur un battant sont adaptés pour qu'un changement d'orientation d'au moins une direction fixe du battant par rapport à un dormant puisse être détecté par le détecteur de déplacement. De même, les moyens de fixation du boîtier sur un battant sont adaptés pour qu'une accélération du battant selon au moins une direction fixe du battant puisse être détectée par le détecteur de déplacement, y compris des chocs sans déplacement du battant.

Plus particulièrement, ledit boîtier comprend des moyens de fixation sur un battant tels que l'unité de traitement est adaptée pour pouvoir détecter le démontage du détecteur de déplacement par rapport au battant requiert de déplacer ledit boîtier avec une accélération et/ou un changement d'orientation adaptés pour, le cas échéant, déclencher une alarme ; cela afin de détecter une tentative d'effraction sur le détecteur.

De plus, avantageusement et selon l'invention, le détecteur de déplacement comprend en outre des moyens d'émission sans fil de signaux.

Plus particulièrement, le détecteur de déplacement comprend avantageusement des moyens d'émission sans fil de signaux selon un protocole de communication sans fil de proximité, c'est-à-dire pouvant atteindre une distance maximale inférieure à 200m, par exemple selon un protocole de communication Wifi.

Avantageusement, le détecteur de déplacement comprend en outre des moyens d'émission sans fil de signaux selon un protocole de communication sans fil à longues distances, c'est-à-dire pouvant atteindre une distance maximale supérieure à 200m, par exemple selon un protocole de communication GSM, GPRS, UMTS ou équivalent suffisant à la mise en oeuvre de l'invention.

En outre, un détecteur de déplacement selon l'invention est avantageusement doté d'une source d'énergie autonome telle qu'une pile et/ou une cellule photovoltaïque par exemple. Un détecteur de déplacement selon l'invention est avantageusement exempt de fil et peut ainsi librement et discrètement être fixé sur tout battant.

Un détecteur de déplacement selon l'invention comprend en outre avantageusement une mémoire adaptée pour pouvoir stocker des données représentatives de l'état d'un battant. Ainsi, un détecteur de déplacement selon l'invention est adapté pour conserver en mémoire l'état « fermé », « ouvert » et/ou « en mouvement » d'un battant.

Avantageusement et selon l'invention, le détecteur de déplacement est adapté pour pouvoir élaborer et émettre sans fil des signaux représentatifs de l'orientation du boîtier, notamment d'un changement d'orientation du boîtier par rapport à un état précédent.

L'unité de traitement de chaque détecteur de déplacement est adaptée pour pouvoir émettre des messages, dit messages d'état, représentatifs de l'orientation au moins d'un battant surveillé auquel ledit détecteur de déplacement est fixé. Les messages d'état sont plus généralement représentatifs de l'état dudit battant par rapport à son dormant. Par exemple, l'unité de traitement du détecteur de déplacement est adaptée pour envoyer des messages d'état représentatifs d'un état « ouvert », d'un état « fermé », ou d'un état « en mouvement » du battant.

Un dispositif selon l'invention est de plus avantageusement caractérisé en ce qu'il comprend une unité centrale adaptée pour recevoir sans fil des signaux émis par un détecteur de déplacement. Une telle unité centrale est notamment adaptée pour pouvoir recevoir des signaux sans fil de proximité.

Ainsi, une pluralité de détecteurs de déplacement peut être disposée dans un local à surveiller, et l'unité centrale reçoit et traite des messages d'état émis par chaque détecteur de déplacement.

Dans certains modes de réalisation de l'invention, chaque détecteur de déplacement est adapté pour pouvoir émettre directement des signaux formant des messages d'état à une antenne distante d'un réseau de télécommunication de longue distance. Cette variante est utile notamment lorsque le dispositif domotique selon l'invention est dépourvu d'unité centrale.

Avantageusement, l'unité de traitement et l'unité centrale comprennent chacune au moins une mémoire de programmation contenant des instructions de fonctionnement.

Une mémoire de programmation selon l'invention est adaptée pour que l'unité centrale puisse fonctionner selon une pluralité de modes de fonctionnement.

En particulier, avantageusement et selon l'invention, l'unité centrale est adaptée pour pouvoir fonctionner selon un premier mode de fonctionnement, dit mode passif, dans lequel des messages reçus des détecteurs de déplacement sont traités.

Dans le cas d'un dispositif domotique d'alarme contre les intrusions et les effractions, le mode passif correspond à un mode de fonctionnement sans surveillance et sans déclenchement de moyens d'alarme.

Également, avantageusement et selon l'invention, l'unité centrale peut en outre avantageusement être adaptée pour pouvoir fonctionner selon un deuxième mode de fonctionnement, dit mode actif, dans lequel l'unité centrale peut activer des moyens d'alarme, en fonction de résultats de traitement des messages reçus des détecteurs de déplacement et/ou d'autres détecteurs avec lesquels elle est en communication. En mode actif l'unité centrale est adaptée pour pouvoir détecter un événement d'intrusion et/ou d'effraction.

Dans le cas d'un dispositif domotique d'alarme contre les intrusions et/ou les effractions, le mode actif correspond à un mode de fonctionnement de surveillance avec déclenchement de moyens d'alarme en cas de détection d'un événement d'intrusion et/ou d'effraction. L'unité centrale peut par exemple être adaptée pour émettre un signal de déclenchement d'une sirène d'alarme, pour émettre un message d'alerte à un utilisateur et/ou à une société de télésurveillance, pour émettre des signaux de déclenchement d'autres dispositifs (fermeture de portes, mise en marche d'une vidéo-surveillance, activation d'un diffuseur de gaz lacrymogène,...), etc.

En mode actif, l'unité centrale est avantageusement adaptée pour pouvoir identifier un événement d'intrusion et/ou d'effraction, sur réception d'un message représentatif de la détection d'un choc émis par un détecteur de déplacement. Un choc est détecté par l'unité de traitement d'un détecteur de déplacement lorsqu'une valeur d'énergie de déplacement (calculée à partir des valeurs d'accélération) est supérieure en valeur absolue à une valeur prédéterminée mémorisée. WO2007048908 expose des exemples de méthodes de traitement des signaux d'accélération de l'accéléromètre pouvant être mises en oeuvre dans le cadre de la présente invention.

Alternativement ou en combinaison, l'unité centrale est adaptée pour pouvoir identifier un événement d'effraction lorsque, en mode actif, elle reçoit d'un détecteur de déplacement un message représentatif d'un changement d'orientation du détecteur.

Alternativement ou en combinaison, l'unité centrale est adaptée pour pouvoir identifier un événement d'effraction lorsque, en mode actif, elle reçoit d'un détecteur de déplacement un message représentatif d'une orientation instantanée distincte d'une orientation de référence d'un battant surveillé.

Ainsi, un dispositif domotique selon l'invention est capable de détecter le déplacement rapide d'un battant surveillé, ou des chocs qui lui sont appliqués - ce qui n'est pas le cas de dispositifs comprenant uniquement un magnétomètre. Tel est le cas d'un battant qui fait l'objet d'une effraction ou d'une ouverture non autorisée. Cependant, un dispositif domotique selon l'invention est aussi capable de détecter une ouverture non autorisée lente (sous le seuil de détection accélérométrique) grâce à la présence du magnétomètre - ce qui n'est pas le cas de dispositifs comprenant uniquement un accéléromètre.

Avantageusement et selon l'invention, l'unité centrale comprend au moins une mémoire adaptée pour pouvoir mémoriser des données représentatives de l'état de chaque battant surveillé. Par exemple, les données enregistrées dans une telle mémoire peuvent être représentatives d'un état « ouvert » ou « fermé » du battant. Les données représentatives de l'état d'un battant surveillé sont susceptibles d'être modifiées sur réception d'un message émis par un détecteur de déplacement.

Ainsi, avantageusement et selon l'invention, si, lors du passage d'un mode passif à un mode actif de l'unité centrale, cette dernière reçoit au moins un signal représentatif du fait qu'un battant n'est pas dans son orientation de référence (par exemple « fermé »), l'unité centrale émet un signal d'information. Un tel signal d'information peut être émis à destination d'une interface utilisateur (écran, haut-parleur,...) et/ou d'un terminal (téléphone, tableau de contrôle du dispositif domotique,...). Ainsi, un dispositif selon l'invention permet par exemple de prévenir un utilisateur qu'une fenêtre de son domicile est restée ouverte au moment où il quitte son domicile et active son dispositif domotique d'alarme.

En outre, avantageusement et selon l'invention, l'unité centrale peut, sur requête d'un utilisateur, émettre un message d'information contenant l'état de l'ensemble des battants surveillés par des détecteurs de déplacement pouvant communiquer avec l'unité centrale.

Avantageusement, l'unité de traitement d'un détecteur de déplacement fonctionne de manière identique quel que soit le mode (passif/actif) de fonctionnement de l'unité centrale.

À des fins de simplicité et d'économie, un détecteur de déplacement selon l'invention peut être adapté pour uniquement émettre des signaux sans fil, sans pouvoir en recevoir.

Alternativement, un détecteur de déplacement selon l'invention peut être adapté pour communiquer en émission et en réception - notamment avec l'unité centrale - et émettre des signaux sur réception d'une requête - notamment émise par l'unité centrale-. Ainsi, un détecteur de déplacement peut par exemple émettre une information d'orientation du battant auquel il est fixé, sur requête de l'unité centrale.

Par ailleurs, avantageusement et selon l'invention, une unité de traitement est adaptée pour ne pas élaborer de message particulier pour une variation brusque et de courte durée de l'orientation du détecteur sans dépassement d'une valeur prédéterminée d'accélération. Une telle fonction permet de filtrer et d'ignorer les variations brusques de champ magnétique dues par exemple à l'alimentation d'un circuit électrique situé à proximité, au passage d'un aimant, etc.

Au contraire, l'unité de traitement est adaptée pour pouvoir détecter une variation durable du champ magnétique terrestre local en mémorisant ce nouveau champ magnétique en plus du champ magnétique détecté lors d'une configuration du détecteur. Plus particulièrement, l'unité de traitement est adaptée pour détecter une variation faible du champ magnétique terrestre local distinctement d'une variation faible et lente de la position d'un battant.

Avantageusement et selon l'invention, chaque détecteur de déplacement comprend une unité de traitement disposée dans le boîtier du détecteur.

L'unité centrale est avantageusement adaptée pour pouvoir traiter des signaux reçus des détecteurs de déplacement.

Avantageusement, un dispositif domotique selon l'invention comprend au moins une unité centrale et une pluralité de détecteurs de déplacement selon l'invention.

L'invention s'étend également à un procédé mis en oeuvre dans un dispositif selon l'invention. Elle s'étend aussi à un procédé de fiabilisation de la détection du déplacement d'un battant mobile en rotation autour d'un axe par rapport à un dormant fixe dans un référentiel terrestre, par un dispositif domotique comprenant :
- au moins un détecteur de déplacement comprenant :
   - un boîtier adapté pour pouvoir être solidarisé au battant,
   - un accéléromètre fixé au boîtier et adapté pour fournir des signaux, dits signaux d'accélération, représentatifs de l'accélération du boîtier selon au moins une direction fixe du boîtier par rapport au dormant,
   - un magnétomètre fixé au boîtier et adapté pour fournir des signaux, dits signaux d'orientation, représentatifs de l'orientation instantanée d'au moins une direction fixe du boîtier par rapport à un champ magnétique terrestre local,
- une unité de traitement des signaux fournis par l'accéléromètre et par le magnétomètre,
procédé dans lequel :
- une valeur d'orientation, dite orientation de référence, prédéterminée du boîtier par rapport au champ magnétique terrestre local est mémorisée,
- les signaux d'accélération au moins sont traités par l'unité de traitement, l'unité de traitement étant adaptée pour pouvoir identifier un événement, dit événement de référence, prédéterminé à partir desdits signaux d'accélération,
- sur détection d'un événement de référence, l'orientation instantanée du boîtier est mémorisée comme orientation de référence.

Plus particulièrement, l'unité de traitement identifie un événement de référence en fonction d'une énergie d'accélération calculée à partir desdits signaux d'accélération.

L'unité de traitement identifie un événement de référence en fonction d'une énergie d'accélération et d'une orientation du battant définie à partir desdits signaux d'orientation. Plus particulièrement, l'unité de traitement identifie un événement de référence en fonction d'une énergie d'accélération et d'une variation d'orientation du battant.

Plus particulièrement, l'orientation de référence est réinitialisée sur détection d'un événement de référence comprenant :
- une accélération du boîtier dudit détecteur correspondant à un choc transmis audit boîtier,
- une orientation du détecteur comprise dans un intervalle prédéterminé autour de l'orientation de référence mémorisée.

Alternativement, l'orientation de référence est réinitialisée sur détection d'un événement de référence comprenant :
- une première variation d'orientation instantanée du détecteur de déplacement de grande amplitude dans un premier sens, puis
- une deuxième variation d'orientation instantanée du détecteur de déplacement de grande amplitude dans un deuxième sens opposé au premier sens, puis
- une valeur énergie d'accélération du détecteur de déplacement supérieure à une valeur d'énergie prédéterminée.

En outre, avantageusement, dans un procédé selon l'invention, l'unité de traitement élabore des messages représentatifs de l'orientation du battant, qui sont émis sans fil par ledit détecteur de déplacement.

Dans un procédé selon l'invention, les messages peuvent être émis selon un protocole de communication à courte distance - par exemple à une unité centrale - et/ou selon un protocole de communication à longue distance.

L'invention concerne également un dispositif et un procédé caractérisés en combinaison par tout ou partie des caractéristiques mentionnées ci-dessus ou ci-après. L'invention concerne notamment un dispositif adapté pour mettre en oeuvre un procédé conforme à l'invention, et un procédé pouvant être mis en oeuvre par un dispositif conforme à l'invention.

D'autres buts, caractéristiques et avantages de l'invention apparaîtront à la lecture de la description suivante donnée à titre non limitatif et qui se réfère aux figures annexées dans lesquelles :
- la figure 1 est une représentation schématique d'un détecteur de déplacement selon l'invention en coupe longitudinale selon un mode de réalisation conforme à l'invention,
- la figure 2 est une représentation schématique d'un lieu dans lequel un dispositif domotique conforme à l'invention est installé,
- la figure 3 est un schéma synoptique fonctionnel d'un mode de réalisation d'un procédé conforme à l'invention,
- la figure 4 est un schéma synoptique fonctionnel détaillé de l'étape 113 du schéma de la figure 3.

Un dispositif selon l'invention comprend au moins un détecteur de déplacement 20.

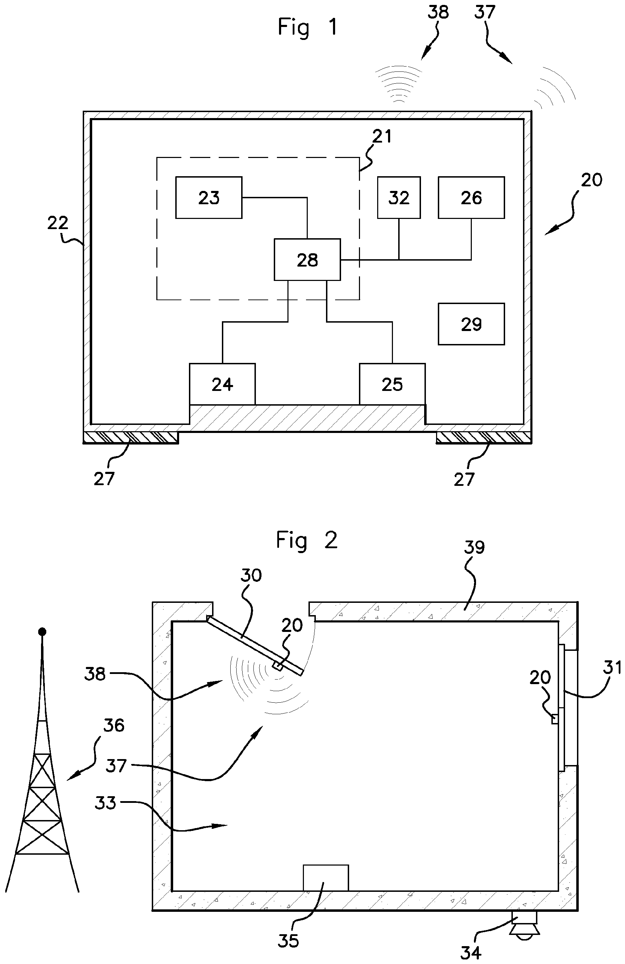

Un mode de réalisation particulier d'un tel détecteur de déplacement 20 est représenté en figure 1. Il comprend un boîtier 22 présentant des moyens 27 de fixation à un battant. Dans l'exemple proposé, les moyens 27 de fixation présentés sont des bandes adhésives. Rien n'empêche de prévoir d'autres moyens de fixation alternatifs ou en combinaison, tels que des vis.

Le détecteur de déplacement 20 comprend un accéléromètre 24 trois axes monté solidaire du boîtier 22 et un magnétomètre 25 trois axes monté solidaire du boîtier 22. L'accéléromètre 24 et le magnétomètre 25 sont reliés électriquement à l'unité de traitement 21 des signaux dudit accéléromètre 24 et dudit magnétomètre 25. L'unité de traitement 21 comprend une mémoire 23 et un processeur 28 auquel l'accéléromètre 24 et le magnétomètre 25 sont reliés. Le processeur 28 est électriquement relié à la mémoire de façon à pouvoir en extraire des données, notamment des données d'instructions, et à pouvoir y mémoriser des données, par exemple des données, dites données d'orientation de référence, représentatives d'une valeur d'orientation, dite orientation de référence, prédéterminée du boîtier 22 par rapport au champ magnétique terrestre local.

Le processeur 28 est en outre relié électriquement à deux émetteurs/récepteurs 26, 32 adaptés pour pouvoir au moins émettre des signaux 37, 38 sans fil. Un premier émetteur/récepteur 26 est adapté pour envoyer des signaux 37 radiofréquences sur courte distance, par exemple selon une norme Wi-Fi, Bluetooth®, Bluetooth® Low Energy, etc. Un deuxième émetteur/récepteur 32 est adapté pour envoyer des signaux 38 radiofréquences sur longue distance, par exemple selon une norme GSM, GPRS, UMTS, etc.

Le détecteur de déplacement 20 est autonome en énergie et comprend une pile 29 reliée électriquement à l'ensemble des éléments 21, 24, 25, 26, 32 du détecteur de déplacement nécessitant une alimentation électrique (liaisons électriques avec la pile 29 non représentées en figure 1).

Ledit dispositif domotique selon le mode de réalisation représenté à la figure 2 est un dispositif de surveillance (ou système d'alarme) installé dans une pièce 33. Il comprend une pluralité de détecteurs de déplacement 20 conformes à l'invention.

Chaque détecteur de déplacement 20 peut envoyer sans fil des messages à destination d'antennes 36 relais distantes par l'intermédiaire de l'émetteur/récepteur 32 longue distance.

Ce dispositif domotique comprend en outre une unité centrale 35 adaptée pour pouvoir recevoir des signaux 37 sans fil émis par chaque émetteur/récepteur 26 courte distance de chaque détecteur de déplacement 20. L'unité centrale 35 est elle-même adaptée pour pouvoir émettre des signaux sans fil à destination d'autres dispositifs, par exemple à destination d'un haut-parleur 34 d'alarme. L'unité centrale 35 est avantageusement reliée à un réseau numérique public tel que l'Internet, par exemple par une liaison sans fil du type Wi-Fi ou Ethernet à travers un serveur domestique d'accès à l'Internet. L'unité centrale 35 est avantageusement adaptée pour pouvoir transmettre des messages via l'Internet à destination d'une interface utilisateur elle-même reliée à l'Internet. L'unité centrale 35 est aussi adaptée pour recevoir des requêtes via l'Internet.

En outre l'unité centrale comprend une mémoire interne adaptée pour pouvoir stocker des informations relatives à l'état de chaque battant surveillé. Avantageusement ladite mémoire interne est en outre adaptée pour pouvoir stocker des informations relatives à la nature de chaque battant surveillé.

L'unité centrale 35 est de plus adaptée pour pouvoir fonctionner selon au moins deux modes : un premier mode, dit mode passif, dans lequel le système d'alarme n'est pas enclenché, et un deuxième mode, dit mode actif, dans lequel le système d'alarme est enclenché. Lors de l'enclenchement de l'unité centrale 35 d'un mode passif vers un mode actif, celle-ci vérifie l'état de chaque battant surveillé, enregistré dans sa mémoire interne, et élabore ou non un message à destination d'une interface utilisateur en fonction dudit état de chaque battant surveillé.

Ainsi par exemple dans la situation représentée en figure 2, une porte 30 équipée d'un détecteur de déplacement 20 conforme à l'invention est en position ouverte. Si un utilisateur enclenche l'unité centrale 35 dans un mode actif, celle-ci émet un message d'information à destination d'une interface utilisateur (écran, haut-parleur,...) et/ou d'un terminal (téléphone, tableau de contrôle du dispositif domotique,...). L'information contenue par le message est qu'au moins l'un des battants surveillés n'est pas dans son orientation de référence ; ou plus précisément, l'invention peut être telle que l'information contenue par le message est que ladite porte 30 n'est pas fermée.

Lorsqu'elle est en mode actif, l'unité centrale 35 est adaptée pour déclencher des moyens d'alarme et/ou émettre des messages d'alerte dès qu'elle reçoit des messages de détecteurs de déplacement contenant une information selon laquelle un battant surveillé subi des chocs, s'est déplacé, ou est déplacé par rapport à son orientation de référence.

Ainsi à la figure 2 une porte 30 équipée d'un détecteur de déplacement 20 est représentée dans une position ouverte distincte de son orientation de référence qui est une position fermée par rapport à un dormant 39 qui est un mur. De même une fenêtre 31 équipée d'un détecteur de déplacement 20 est représentée en orientation de référence fermée.

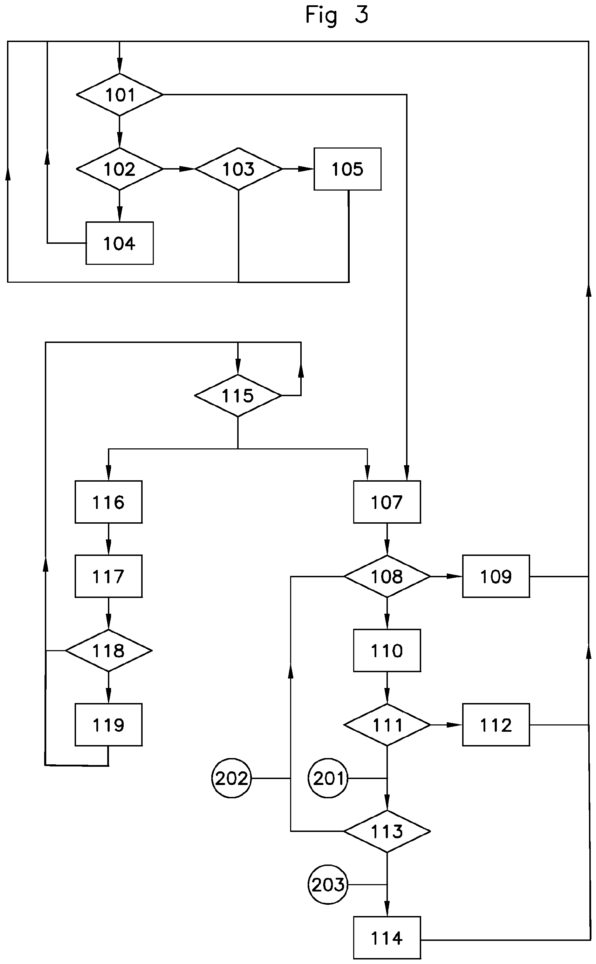

La figure 3 représente un procédé mis en oeuvre dans un détecteur de déplacement 20 conforme à la figure 1, équipé d'un magnétomètre 25.

Le magnétomètre et l'accéléromètre sont avantageusement des composants électroniques miniaturisés, par exemple du type SM303D fabriqué par STMicroelectronics, ou MAG310 fabriqué par Freescale.

Le magnétomètre 25 est fixé mécaniquement au boîtier 22 de façon à en être solidaire.

Le magnétomètre est un magnétomètre trois axes qui fournit des signaux représentatifs de la valeur en projection du champ magnétique terrestre local sur chacun de trois axes orthogonaux. Ces mesures permettent à l'unité de traitement de calculer la norme du champ magnétique terrestre local et de déterminer l'orientation angulaire du boîtier par rapport au champ magnétique terrestre local et donc par rapport à un dormant dont on connaît l'orientation (orientation de référence), fixe dans ce champ magnétique terrestre local.

À intervalles de temps réguliers par exemple toutes les cinq secondes, l'unité de traitement 21 du détecteur de déplacement 20 effectue l'étape 101. L'étape 101 correspond à une surveillance passive de l'orientation d'un battant, échantillonnée à une première fréquence f1 (par exemple de l'ordre de 0,2 Hz) permettant d'économiser l'énergie consommée par le magnétomètre et l'unité de traitement.

Dans l'étape 101 l'intensité (ou norme) du champ magnétique instantané est comparée à l'intensité du champ magnétique de référence enregistrée en mémoire 23, à la fréquence f1. L'intensité est calculée par l'unité de traitement à partir des valeurs mesurées du champ magnétique terrestre local instantané sur chacun des trois axes dudit magnétomètre. Si la différence entre l'intensité du champ magnétique instantané et l'intensité du champ magnétique de référence est supérieure à une valeur de seuil enregistré en mémoire 23, l'unité de traitement 21 passe à l'étape 102. La valeur de seuil est choisie en fonction de la sensibilité du magnétomètre et de la marge d'erreur sur le résultat du calcul de l'intensité du champ magnétique. La valeur de seuil est par exemple d'environ 70mG.

Dans l'étape 102 l'intensité du champ magnétique instantané est enregistrée en mémoire puis comparée à une autre valeur enregistrée en mémoire 23, représentative de l'intensité d'un champ magnétique produit par un élément puissant. La valeur enregistrée est par exemple de l'ordre de 5 Gauss, soit environ 10 fois supérieure au champ magnétique terrestre. Si l'intensité du champ magnétique instantané est supérieure à cette valeur enregistrée, l'unité de traitement 21 passe à l'étape 104.

Dans l'étape 104, l'unité de traitement émet un message (via un émetteur/récepteur 26, 32) à destination de l'unité centrale 35 l'informant de la détection de la présence d'un aimant à proximité dudit détecteur de déplacement 20 puis revient à l'étape 101. Dans certains cas, si l'unité centrale 35 est en mode actif, cela peut être interprété comme une effraction et l'unité centrale peut alors déclencher des moyens d'alarme et/ou émettre des messages d'alerte.

Si, dans l'étape 102, l'intensité du champ magnétique instantané est inférieure à ladite valeur enregistrée, l'unité de traitement 21 passe à l'étape 103.

Dans l'étape 103, la variation de l'intensité du champ magnétique dans le temps (entre deux échantillonnages) est comparée à une valeur de seuil enregistrée dans la mémoire 23. Ladite valeur de seuil est par exemple d'environ 20mG. Si l'intensité du champ magnétique varie de façon importante, le champ magnétique est instable et l'unité de traitement revient à l'étape 101.

Si l'intensité du champ magnétique est stable, l'unité de traitement passe à l'étape 105. En effet l'intensité du champ magnétique terrestre étant faible, le champ magnétique instantané peut être perturbé par des objets métalliques ou électriques installés de façon permanente à proximité du détecteur de déplacement 20.

Dans l'étape 105, le nouveau champ magnétique est défini comme champ magnétique de référence, plus particulièrement l'intensité et l'orientation tridimensionnelle du champ magnétique terrestre local instantané sont enregistrées sous forme de données de référence dans une mémoire. Ainsi l'orientation et la norme du champ magnétique instantané remplacent des valeurs mémorisées d'un champ magnétique de référence. On sait que le champ magnétique terrestre local a varié et que ce n'est pas le battant qui s'est sensiblement déplacé, grâce au test de l'étape 101 sur l'intensité du champ magnétique mesuré : le déplacement du battant ne modifie pas l'intensité (norme) du champ magnétique mesuré. Après l'étape 105, l'unité de traitement 21 revient à l'étape 101.

Si, dans l'étape 101, la différence entre l'intensité du champ magnétique instantané et l'intensité du champ magnétique de référence est inférieure à une valeur de seuil enregistrée en mémoire 23, c'est que le battant a, a priori, changé d'orientation et l'unité de traitement 21 passe à l'étape 107.

Dans l'étape 107, l'unité de traitement 21 détermine l'orientation instantanée du boîtier par rapport à une orientation de référence en fonction de la valeur instantanée mesurée du champ magnétique terrestre local selon chacun des trois axes orthogonaux par le magnétomètre 25.

Dans une suite d'étapes d'ordre n, l'unité de traitement 21 enregistre en mémoire l'orientation instantanée du battant surveillé tout en conservant en mémoire au moins l'orientation instantanée déterminée dans une suite d'étapes d'ordre n-1. L'unité de traitement passe ensuite à l'étape 108.

Dans l'étape 108, l'unité de traitement compare l'orientation instantanée du boîtier 22 surveillé (donc du battant surveillé sur lequel le détecteur de déplacement est fixé) avec une valeur de seuil, dite marge d'erreur, correspondant à l'erreur maximale de détermination de l'orientation du boîtier par l'unité de traitement à partir des signaux d'orientation fournie par le magnétomètre choisi. Ladite marge d'erreur est par exemple choisie égale à 2° ou 7°. Si l'orientation instantanée du battant surveillé est inférieure à cette marge d'erreur, l'unité de traitement passe à l'étape 109.

Dans l'étape 109, l'unité de traitement lit des données mémorisées dans une mémoire réinscriptible du dispositif correspondant à l'état enregistré du battant. Si l'état enregistré est différent de l'état « fermé », l'unité de traitement émet un message à destination de l'unité centrale 35 l'informant que le battant est dans son orientation de référence (correspondant par exemple à l'état « fermé »). L'unité centrale 35 enregistre l'état dudit battant. L'unité de traitement enregistre le nouvel état du battant.

Plus en détail, si le battant est en cours de fermeture, à l'étape 108, la marge d'erreur est choisie de 2° afin de s'assurer que la porte à bien été refermée. Si au contraire, le battant est en cours d'ouverture, la marge d'erreur est choisie de 7° qui est une ouverture minimale en deçà de laquelle personne ne peut passer un ouvrant classique (en général de largeur maximale de 92cm).

Après l'étape 109, l'unité de traitement revient à l'étape 101 à une fréquence f1.

En effet une orientation instantanée inférieure à ladite marge d'erreur peut correspondre à une erreur de mesure. Ladite marge d'erreur est donc déterminée en fonction de la précision du magnétomètre et des calculs permettant d'obtenir une orientation instantanée du battant.

Si, dans l'étape 108, l'orientation instantanée du battant est supérieure à ladite marge d'erreur, l'unité de traitement passe à l'étape 110.

Dans l'étape 110, l'unité de traitement émet un message à destination de l'unité centrale 35 l'informant que le battant est dans une position distincte de son orientation de référence (correspondant par exemple à l'état « ouvert »). L'unité centrale 35 enregistre l'état dudit battant. L'unité de traitement passe ensuite à l'étape 111. De plus, si tel n'était pas encore le cas, l'unité de traitement 21 acquiert dès lors les données du magnétomètre à une deuxième fréquence f2 plus élevée que la fréquence f1. On choisit par exemple f2 de l'ordre de 10 fois plus grande que f1. On choisit par exemple f1 égale à 0,2 Hz et la fréquence f2 égale à 2Hz.

Dans l'étape 111, l'unité de traitement compare la variation d'orientation du battant dans le temps (entre deux mesures successives à la fréquence f2) par rapport à une valeur de seuil prédéterminée. La valeur de seuil est par exemple choisie de l'ordre de 5°. Si l'orientation du battant est stable (variation temporelle de l'orientation inférieure à ladite valeur de seuil), l'unité de traitement passe à l'étape 112.

Dans l'étape 112, l'unité de traitement lit des données mémorisées dans une mémoire réinscriptible du dispositif correspondant à l'état enregistré du battant. Si l'état enregistré est différent de l'état « ouvert », l'unité de traitement émet un message à destination de l'unité centrale 35 l'informant que le battant est fixe dans une position distincte de son orientation de référence (« ouvert » par exemple), puis revient à l'étape 101 à la fréquence f1. L'unité centrale 35 enregistre l'état dudit battant. Lorsque l'unité centrale 35 est en mode actif, la réception d'un tel message peut être interprété par l'unité centrale comme une effraction et l'unité centrale déclenche alors des moyens d'alarme et/ou émet un (ou plusieurs) message(s) d'alerte à destination d'un utilisateur et/ou d'une société de télésurveillance et/ou des forces de l'ordre. Ainsi grâce à l'invention le déplacement, même lent, d'un battant surveillé peut être détecté ; il peut notamment être détecté même en l'absence de détection d'accélération dudit battant au-delà d'un certain seuil.

Lorsque l'unité centrale 35 est en mode passif, la réception d'un tel message peut mettre en oeuvre des mécanismes de gestions thermiques d'un local.

Si, à l'étape 111, l'orientation du battant est instable (variation temporelle de l'orientation supérieure à ladite valeur de seuil), l'unité de traitement passe à l'étape 113.

Dans l'étape 113, l'unité de traitement met en oeuvre un algorithme de vérification des critères de détection d'un événement de référence. Si ces critères ne sont pas vérifiés, l'unité de traitement revient à l'étape 108.

Si, dans l'étape 113, les critères de détection d'un événement de référence sont vérifiés, l'unité de traitement passe à l'étape 114.

Dans l'étape 114, l'unité de traitement réinitialise l'orientation de référence du battant surveillé, c'est-à-dire qu'elle remplace les données d'orientation de référence présentent dans la mémoire 23 par des données représentatives de l'orientation instantanée du battant surveillé, ladite orientation instantanée ayant été déterminée à l'étape 107. L'unité de traitement revient ensuite à l'étape 101 à la fréquence f1.

Ainsi, l'utilisation d'un magnétomètre simple et bon marché et basé sur l'utilisation du champ magnétique terrestre local comme référence est rendue possible par l'invention, grâce à l'association d'un magnétomètre et d'un accéléromètre, et par la réinitialisation régulière d'une orientation de référence d'un battant surveillé, sur la base de la détection d'un événement de référence connu pour un battant.

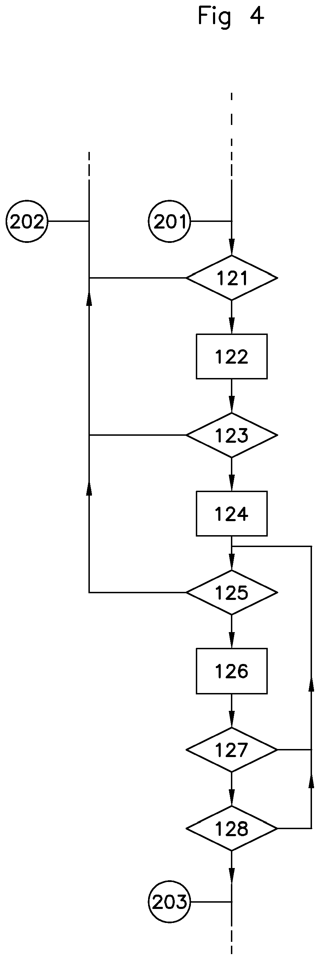

Les la références 201, 202 et 203 représentent les connexions entre le schéma synoptique de la figure 3 et un schéma synoptique de la figure 4 qui détaille l'étape 113 de la figure 3.

Ainsi si, à l'étape 111, l'orientation du battant est instable (variation temporelle de l'orientation supérieure à ladite valeur de seuil), l'unité de traitement passe en fait à l'étape 121 (cf. figure 4 via la référence 201).

Dans l'étape 121, l'unité de traitement compare l'orientation instantanée du battant à une valeur prédéterminée β correspond à une ouverture significative d'un battant - notamment un passage d'au moins 20 cm permettant le passage d'une personne. La valeur prédéterminée β est par exemple de l'ordre de 15° - permettant un passage de 20cm dans le cas d'une porte de 73cm de large. Si l'orientation instantanée du battant est inférieure à cette valeur prédéterminée β, l'unité de traitement revient à l'étape 108 (cf. figure 3 via la référence 202).

Si, dans l'étape 121, l'orientation instantanée du battant est supérieure à ladite valeur prédéterminée, l'unité de traitement passe à l'étape 122.

Dans l'étape 122, l'unité de traitement 21 détermine le sens de rotation du battant en fonction de son orientation instantanée (valeur enregistrée d'ordre n) et de l'orientation instantanée précédemment déterminée (valeur enregistrée d'ordre n-1). L'unité de traitement passe ensuite à l'étape 123.

Dans l'étape 123, l'unité de traitement compare le sens de rotation du battant à un sens prédéterminé, notamment un sens d'ouverture. S'il est ainsi déterminé que le battant surveillé pivote dans le sens d'une fermeture, l'unité de traitement revient à l'étape 108 (cf. figure 3 via la référence 202).

Si, dans l'étape 123, il est déterminé que le battant surveillé pivote dans le sens d'une ouverture, l'unité de traitement passe à l'étape 124.

Dans l'étape 124, l'unité de traitement déclenche un chronomètre et passe à l'étape 125.

Dans l'étape 125, l'unité de traitement compare la valeur dudit chronomètre à une valeur de délai prédéterminée T1 enregistrée en mémoire. La valeur T1 est par exemple choisie de l'ordre de 3 secondes. Si le temps écoulé depuis le déclenchement du chronomètre est supérieur audit délai prédéterminé, c'est-à-dire que le battant n'a pas été refermé dans un délai prédéterminé T1 à partir de son ouverture, l'unité de traitement revient à l'étape 108 (cf. figure 3 via la référence 202).

Si, dans l'étape 125, le temps écoulé depuis le déclenchement du chronomètre est inférieur audit délai prédéterminé T1, l'unité de traitement passe à l'étape 126.

Dans l'étape 126, l'unité de traitement 21 détermine de nouveau l'orientation instantanée du battant surveillé. L'unité de traitement 21 passe ensuite à l'étape 127.

Dans l'étape 127, l'unité de traitement détermine le sens de rotation du battant à partir de l'orientation instantanée déterminée à l'étape 126 (valeur enregistrée d'ordre n) et de l'orientation instantanée précédemment déterminée (valeur enregistrée d'ordre n-1). Puis l'unité de traitement compare le sens de rotation du battant à un sens prédéterminé, notamment un sens d'ouverture. S'il est déterminé que le battant surveillé pivote dans le sens d'une ouverture, c'est-à-dire qu'il continue de pivoter dans le même sens qu'à l'étape 123, l'unité de traitement revient à l'étape 125.

Si au contraire il est déterminé dans l'étape 127 que le battant surveillé pivote dans le sens d'une fermeture, c'est-à-dire qu'il a changé de sens de pivotement depuis l'étape 123, l'unité de traitement passe à l'étape 128. Le battant a donc été ouvert et est en cours de fermeture.

Dans l'étape 128, l'unité de traitement déclenche un chronomètre et surveille les signaux délivrés par l'accéléromètre pendant un délai prédéterminé T2 en comparant les valeurs mesurées de l'accélération sur chaque axe de l'accéléromètre à une valeur prédéterminée mémorisée. Le délai T2 est par exemple choisi de l'ordre de 2 secondes. Rien n'empêche de réduire ce délai à 0 seconde, dès lors que le choc de fermeture de la porte est attendu dans la foulée de son déplacement angulaire dans le sens de la fermeture.

Chaque valeur prédéterminée est choisie pour que toute valeur mesurée supérieure à ladite valeur prédéterminée corresponde dans les faits à un choc. Si aucune valeur mesurée supérieure à une valeur prédéterminée - ce qui correspond à un choc - n'est détecté dans le délai T2, l'unité de traitement revient à l'étape 125.

Si, dans l'étape 128, un choc est détecté par l'accéléromètre dans ledit délai prédéterminé T2 l'unité de traitement passe à l'étape 114 (cf. figure 3 via la référence 203). Le choc correspond normalement à la fermeture d'un battant 30, 31 sur son dormant 39. Ainsi la suite d'événements constituée de la détection d'un mouvement d'ouverture, suivie d'un mouvement de fermeture, puis d'un choc de contact du battant sur ses montants constitue un événement de référence.

Un cycle de détection basé sur les signaux de l'accéléromètre est décrit en figure 3.

Dans l'étape 115 la valeur de l'accélération selon chaque axe de l'accéléromètre est comparée à une valeur de référence enregistrée en mémoire 23, cela à une fréquence f3. La fréquence f3 est choisie de l'ordre de 10 fois supérieure à la fréquence f1. La fréquence f3 est par exemple de l'ordre de 2 Hz. Si aucune des valeurs de l'accélération selon chaque axe de l'accéléromètre n'est supérieure à sa valeur de référence enregistrée, l'unité de traitement 21 continue sa surveillance (étapes 115) à la fréquence f3. L'étape 115 correspond donc à une surveillance passive de l'accélération subie par un battant.

Si, dans l'étape 115, la valeur de l'accélération instantanée du détecteur selon au moins un axe dudit accéléromètre est supérieure à une valeur de référence enregistrée en mémoire, l'unité de traitement 21 passe aux étapes 107 et 116 dans lesquelles elle surveille à une fréquence plus élevée la position angulaire et les accélérations du battant surveillé. Les données du magnétomètre sont alors acquises à la fréquence f2 et non plus à la fréquence f1. Les données de l'accéléromètre sont alors acquises à la fréquence f4 et non plus à la fréquence f3. On choisit par exemple f4 de l'ordre de 10 fois plus grande que f3. La fréquence f4 est par exemple de l'ordre de 25 Hz.

Dans l'étape 116, l'unité de traitement procède un filtrage spécifique des signaux reçus dudit accéléromètre 24, puis passe à l'étape 117.

Dans l'étape 117, l'unité de traitement calcule l'énergie de déplacement correspondant aux accélérations détectées, puis passe à l'étape 118.

Dans l'étape 118, l'unité de traitement 21 compare l'énergie de déplacement calculé à l'étape 117 selon chaque axe dudit accéléromètre par rapport à une valeur de seuil enregistrée en mémoire 23. Les valeurs de seuil sont préenregistrées en mémoire et peuvent être modifiées par l'unité de traitement au cours de l'utilisation d'un détecteur de déplacement selon l'invention afin d'adapter chaque détecteur de déplacement à la nature du battant sur lequel il est fixé. Les valeurs de seuil sont pour que des énergies de déplacement calculées selon chaque axe dudit accéléromètre inférieures auxdites valeurs de seuil correspondent à des accélérations ou à des chocs jugés normaux pour ledit battant surveillé (par exemple de petits déplacements provoqués par le vent sur un battant monté avec un jeu non-nul).

Si, dans l'étape 118, l'énergie de déplacement est supérieure à une valeur de seuil selon au moins l'un des axes dudit accéléromètre, l'unité de traitement passe à l'étape 119.

Dans l'étape 119 l'unité de traitement 21 élabore puis émet un message d'alarme à destination de l'unité centrale 35 l'informant que le battant subit des accélérations importantes. Lorsque l'unité centrale 35 est en mode actif, la réception d'un tel message est interprétée par l'unité centrale comme une tentative d'effraction et l'unité centrale déclenche alors des moyens d'alarme et/ou émet un (ou plusieurs) message(s) d'alerte. L'unité de traitement 21 revient ensuite à l'étape 115.

Ainsi, même en l'absence de détection d'un déplacement angulaire d'un battant surveillé, ou en cas d'éblouissement malveillant du magnétomètre par un aimant, la détection de l'accélération du battant continue de permettre une détection d'effraction ou de vol.

L'invention peut faire l'objet de nombreuses autres variantes de réalisation non représentées.

L'invention peut faire l'objet d'applications domotiques différentes des systèmes d'alarmes. Ainsi l'invention permet par exemple de connaître la position (ouverte ou non) de chaque battant d'un bâtiment, ce qui peut être utile par exemple dans le cadre de la gestion thermique ou de la sécurité (contrôle d'accès, gestion incendie, etc.) d'un bâtiment. Une telle gestion peut aussi permettre d'assurer la sécurité des personnes se situant dans un bâtiment (école, hôpital, habitation, etc.), et/ou d'en extraire des informations sur le comportement des usagers d'un bâtiment par exemple à partir de la fréquence d'entrée dans une pièce (WC, laboratoire, etc.).

Rien n'empêche, dans un dispositif selon l'invention, que chaque détecteur de déplacement soit dépourvu d'unité de traitement et que chaque détecteur de déplacement comprenne des moyens de transmission des signaux d'accélération et des signaux d'orientation à une unité centrale distante comprenant une unité de traitement desdits signaux conforme à l'invention.

## Revendications

1. Dispositif domotique comprenant :
- au moins un détecteur de déplacement (20) d'un battant (30, 31) mobile en rotation autour d'un axe par rapport à un dormant (39) fixe dans un référentiel terrestre, ledit détecteur de déplacement comprenant :
• un boîtier (22) adapté pour pouvoir être solidarisé au battant,
• un accéléromètre (24) fixé au boîtier et adapté pour fournir des signaux, dits signaux d'accélération, représentatifs de l'accélération du boîtier (22) selon au moins une direction fixe du boîtier (22) par rapport au dormant (39),
• un magnétomètre (25) fixé au boîtier et adapté pour fournir des signaux, dits signaux d'orientation, représentatifs de l'orientation instantanée d'au moins une direction fixe du boîtier (22) par rapport à un champ magnétique terrestre local,
- une unité de traitement (21) des signaux fournis par l'accéléromètre (24) et par le magnétomètre (25),
- l'unité de traitement (21) comprend au moins une mémoire (23) et est adaptée pour y stocker des données, dites données d'orientation de référence, représentatives d'une valeur d'orientation, dite orientation de référence, prédéterminée du boîtier (22) par rapport au champ magnétique terrestre local,
**caractérisé en ce que**:
- l'unité de traitement (21) est adaptée pour pouvoir identifier un événement, dit événement de référence, prédéterminé au moins à partir desdits signaux d'accélération,
- l'unité de traitement (21) est adaptée pour, sur détection dudit événement de référence, remplacer les données d'orientation de référence par des données représentatives de l'orientation instantanée du boîtier (22).

2. Dispositif selon la revendication 1, **caractérisé en ce que** l'unité de traitement (21) est adaptée pour pouvoir identifier un événement de référence prédéterminé à partir des signaux d'accélération et des signaux d'orientation.

3. Dispositif selon l'une des revendications 1 ou 2, **caractérisé en ce que** l'unité de traitement (21) est adaptée pour pouvoir identifier un événement de référence dans lequel :
- les signaux d'orientation sont représentatifs d'une première variation d'orientation instantanée du détecteur de déplacement (20) de grande amplitude dans un premier sens, puis
- les signaux d'orientation sont représentatifs d'une deuxième variation d'orientation instantanée du détecteur de déplacement (20) de grande amplitude dans un deuxième sens opposé au premier sens, puis
- une énergie d'accélération du détecteur de déplacement est supérieure à une valeur d'énergie prédéterminée.

4. Dispositif selon l'une des revendications 1 à 3, **caractérisé en ce que** l'accéléromètre (24) est un accéléromètre trois axes adapté pour fournir, en tant que signaux d'accélération, des données représentatives de mesures d'accélérations instantanées du boîtier (22) dans un référentiel terrestre.

5. Dispositif selon l'une des revendications 1 à 4, **caractérisé en ce que** le magnétomètre (25) est un magnétomètre trois axes adapté pour fournir des signaux d'orientation représentatifs de l'orientation instantanée de trois directions fixes du boîtier (22) par rapport à la direction du nord magnétique terrestre.

6. Dispositif selon l'une des revendications 1 à 5, **caractérisé en ce que** le détecteur de déplacement (20) comprend en outre des moyens (26, 32) d'émission sans fil de signaux (37, 38).

7. Dispositif selon la revendication 6, **caractérisé en ce que** le détecteur de déplacement (20) est adapté pour pouvoir élaborer et émettre sans fil des signaux (37, 38) représentatifs de l'orientation du boîtier (22).

8. Dispositif selon l'une des revendications 6 ou 7, **caractérisé en ce qu'**il comprend en outre une unité centrale (35) adaptée pour recevoir sans fil des signaux (37) émis par un détecteur de déplacement (20).

9. Procédé de fiabilisation de la détection du déplacement d'un battant (30, 31) mobile en rotation autour d'un axe par rapport à un dormant (39) fixe dans un référentiel terrestre, par un dispositif domotique comprenant :
- au moins un détecteur de déplacement (20) comprenant :
• un boîtier (22) adapté pour pouvoir être solidarisé au battant,
• un accéléromètre (24) fixé au boîtier et adapté pour fournir des signaux, dits signaux d'accélération, représentatifs de l'accélération du boîtier selon au moins une direction fixe du boîtier par rapport au dormant,
• un magnétomètre (25) fixé au boîtier et adapté pour fournir des signaux, dits signaux d'orientation, représentatifs de l'orientation instantanée d'au moins une direction fixe du boîtier par rapport à un champ magnétique terrestre local,
- une unité de traitement (21) des signaux fournis par l'accéléromètre et par le magnétomètre,
- une valeur d'orientation, dite orientation de référence, prédéterminée du boîtier par rapport au champ magnétique terrestre local est mémorisée,
ledit procédé étant **caractérisé en ce que**:
- les signaux d'accélération au moins sont traités par l'unité de traitement, l'unité de traitement étant adaptée pour pouvoir identifier un événement, dit événement de référence, prédéterminé à partir desdits signaux d'accélération,
- sur détection dudit événement de référence, l'orientation instantanée du boîtier est mémorisée comme orientation de référence.

10. Procédé selon la revendication 9 dans lequel l'unité de traitement (21) élabore des messages représentatifs de l'orientation du battant (30, 31), qui sont émis sans fil par ledit détecteur de déplacement (20).

## Patentansprüche

1. Haustechnik-Vorrichtung, umfassend:
- mindestens einen Verschiebungssensor (20) eines Flügels (30, 31), der in Rotation um eine Achse mit Bezug auf einen festen Rahmen (39) in einem terrestrischen Bezugssystem beweglich ist, wobei der Verschiebungssensor Folgendes umfasst:
• ein Gehäuse (22), das ausgelegt ist, um mit dem Flügel fest verbunden zu sein,
• einen Beschleunigungsmesser (24), der an das Gehäuse befestigt und ausgelegt ist, um Signale, bezeichnet als Beschleunigungssignale, zu liefern, die repräsentativ für die Beschleunigung des Gehäuses (22) gemäß einer festen Richtung des Gehäuses (22) mit Bezug auf den Rahmen (39) sind,
• ein Magnetometer (25), der an das Gehäuse befestigt und ausgelegt ist, um Signale, bezeichnet als Orientierungssignale, zu liefern, die repräsentativ für die momentane Orientierung von mindestens einer festen Richtung des Gehäuses (22) mit Bezug auf ein lokales terrestrisches Magnetfeld sind,
- eine Verarbeitungseinheit (21) der Signale, die vom Beschleunigungsmesser (24) und vom Magnetometer (25) geliefert werden,
- die Verarbeitungseinheit (21) umfasst mindestens einen Speicher (23) und ist ausgelegt, um darin Daten, bezeichnet als Referenz-Orientierungsdaten, zu speichern, die repräsentativ für einen vorbestimmten Orientierungswert, bezeichnet als Referenz-Orientierungswert, des Gehäuses (22) mit Bezug auf das lokale terrestrische Magnetfeld sind,
**dadurch gekennzeichnet, dass**:
- die Verarbeitungseinheit (21) ausgelegt ist, um ein vorbestimmtes Ereignis, bezeichnet als Referenzereignis, mindestens ausgehend von den Beschleunigungssignalen identifizieren zu können,
- die Verarbeitungseinheit (21) ausgelegt ist um, beim Nachweis des Referenzereignisses, die Referenz-Orientierungsdaten durch Daten ersetzen zu können, die repräsentativ für die momentane Orientierung des Gehäuses (22) sind.

2. Vorrichtung nach Anspruch 1, **dadurch gekennzeichnet, dass** die Verarbeitungseinheit (21) ausgelegt ist, um ein vorbestimmtes Ereignis, bezeichnet als Referenzereignis, ausgehend von den Beschleunigungssignalen und den Orientierungssignalen identifizieren zu können.

3. Vorrichtung nach einem der Ansprüche 1 oder 2, **dadurch gekennzeichnet, dass** die Verarbeitungseinheit (21) ausgelegt ist, um ein Referenzereignis identifizieren zu können, in dem:
- die Orientierungssignale repräsentativ für eine erste Variation der momentanen Orientierung des Verschiebungssensors (20) mit großer Amplitude in einer ersten Ausrichtung sind, dann
- die Orientierungssignale repräsentativ für eine zweite Variation der momentanen Orientierung des Verschiebungssensors (20) mit großer Amplitude in einer zweiten Ausrichtung gegenüber der ersten Ausrichtung sind, dann
- eine Beschleunigungsenergie des Verschiebungssensors größer als ein vorbestimmter Energiewert ist.

4. Vorrichtung nach einem der Ansprüche 1 bis 3, **dadurch gekennzeichnet, dass** der Beschleunigungsmesser (24) ein Beschleunigungsmesser mit drei Achsen ist, der ausgelegt ist, um, als Beschleunigungssignale, Daten zu liefern, die repräsentativ für Messungen von momentanen Beschleunigungen des Gehäuses (22) in einem terrestrischen Bezugssystem sind.

5. Vorrichtung nach einem der Ansprüche 1 bis 4, **dadurch gekennzeichnet, dass** der Magnetometer (25) ein Magnetometer mit drei Achsen ist, der ausgelegt ist, um Orientierungssignale zu liefern, die repräsentativ für die momentane Orientierung von drei festen Richtungen des Gehäuses (22) mit Bezug auf die Richtung des terrestrischen magnetischen Nordens sind.

6. Vorrichtung nach einem der Ansprüche 1 bis 5, **dadurch gekennzeichnet, dass** der Verschiebungssensor (20) außerdem Mittel (26, 32) zur drahtlosen Sendung von Signalen (37, 38) umfasst.

7. Vorrichtung nach Anspruch 6, **dadurch gekennzeichnet, dass** der Verschiebungssensor (20) ausgelegt ist, um Signale (37, 38) erstellen und drahtlos senden zu können, die repräsentativ für die Orientierung des Gehäuses (22) sind.

8. Vorrichtung nach einem der Ansprüche 6 oder 7, **dadurch gekennzeichnet, dass** sie außerdem eine zentrale Einheit (35) umfasst, die ausgelegt ist, um drahtlos Signale (37) zu erhalten, die von einem Verschiebungssensor (20) gesendet wurden.

9. Verfahren zur Erhöhung der Zuverlässigkeit des Nachweises der Verschiebung eines Flügels (30, 31), der in Rotation um eine Achse mit Bezug auf einen festen Rahmen (39) in einem terrestrischen Bezugssystem beweglich ist, durch eine Haustechnik-Vorrichtung, umfassend:
- mindestens einen Verschiebungssensor (20), umfassend:
• ein Gehäuse (22), das ausgelegt ist, um mit dem Flügel fest verbunden zu sein,
• einen Beschleunigungsmesser (24), der an das Gehäuse befestigt und ausgelegt ist, um Signale, bezeichnet als Beschleunigungssignale, zu liefern, die repräsentativ für die Beschleunigung des Gehäuses gemäß einer festen Richtung des Gehäuses mit Bezug auf den Rahmen sind,
• ein Magnetometer (25), der an das Gehäuse befestigt und ausgelegt ist, um Signale, bezeichnet als Orientierungssignale, zu liefern, die repräsentativ für die momentane Orientierung von mindestens einer festen Richtung des Gehäuses mit Bezug auf ein lokales terrestrisches Magnetfeld sind,
- eine Verarbeitungseinheit (21) der Signale, die vom Beschleunigungsmesser und vom Magnetometer geliefert werden,
- ein vorbestimmter Orientierungswert, genannt Referenzorientierung, des Gehäuses mit Bezug auf das lokale terrestrische Magnetfeld wird gespeichert,
wobei das Verfahren **dadurch gekennzeichnet ist, dass**:
- mindestens die Beschleunigungssignale durch die Verarbeitungseinheit verarbeitet werden, wobei die Verarbeitungseinheit ausgelegt ist, um ein vorbestimmtes Ereignis, bezeichnet als Referenzereignis, ausgehend von den Beschleunigungssignalen identifizieren zu können,
- beim Nachweis des Referenzereignisses die momentane Orientierung des Gehäuses als Referenzorientierung gespeichert wird.

10. Verfahren nach Anspruch 9, wobei die Verarbeitungseinheit (21) Meldungen erstellt, die repräsentativ für die Orientierung des Flügels (30, 31) sind, die drahtlos durch den Verschiebungssensor (20) gesendet werden.

## Claims

1. Home automation device comprising:
- at least one movement detector (20) for detecting movement of a wing (30, 31) rotatable about an axis relative to a frame (39) fixed in a terrestrial reference system, said movement detector comprising:
• a housing (22) adapted to be securable to the wing,
• an accelerometer (24) fixed to the housing and adapted to provide signals, named acceleration signals, representative of the acceleration of the housing (22) along at least one fixed direction of the housing (22) relative to the frame (39),
• a magnetometer (25) fixed to the housing and adapted to provide signals, named orientation signals, representative of the instantaneous orientation of at least one fixed direction of the housing (22) relative to an Earth's local magnetic field,
- a processing unit (21) for processing the signals provided by the accelerometer (24) and by the magnetometer (25),
- the processing unit (21) comprises at least one memory (23) and is adapted to store therein predetermined data, named reference orientation data, representative of an orientation value, named reference orientation, of the housing (22) relative to the Earth's local magnetic field,
**characterised in that**:
- the processing unit (21) is adapted to be able to identify a predetermined event, named reference event, at least from the acceleration signals,
- the processing unit (21) is adapted, on detection of a reference event, to replace the reference orientation data with data representative of the instantaneous orientation of the housing (22).

2. Device according to Claim 1, **characterised in that** the processing unit (21) is adapted to be able to identify a predetermined reference event from the acceleration signals and the orientation signals.

3. Device according to one of Claims 1 or 2, **characterised in that** the processing unit (21) is adapted to be able to identify a reference event in which:
- the orientation signals are representative of a first instantaneous variation in orientation of the movement detector (20) of large amplitude in a first direction, then
- the orientation signals are representative of a second instantaneous variation in orientation of the movement detector (20) of large amplitude in a second direction opposite the first direction, then
- an acceleration energy of the movement detector is greater than a predetermined energy value.

4. Device according to one of Claims 1 to 3, **characterised in that** the accelerometer (24) is a three-axis accelerometer adapted to provide, as acceleration signals, data representative of instantaneous acceleration measurements of the housing (22) in a terrestrial reference system.

5. Device according to one of Claims 1 to 4, **characterised in that** the magnetometer (25) is a three-axis magnetometer adapted to provide orientation signals representative of the instantaneous orientation of three fixed directions of the housing (22) relative to the direction of the Earth's magnetic north.

6. Device according to one of Claims 1 to 5, **characterised in that** the movement detector (20) further comprises wireless signal (37, 38) transmitting means (26, 32).

7. Device according to Claim 6, **characterised in that** the movement detector (20) is adapted to be able to generate and wirelessly transmit signals (37, 38) representative of the orientation of the housing (22).

8. Device according to one of Claims 6 or 7, **characterised in that** it further comprises a central unit (35) adapted to receive wirelessly signals (37) transmitted by a movement detector (20).

9. Method for enhancing the reliability of detecting the movement of a wing (30, 31) rotatable about an axis relative to a frame (39) fixed in a terrestrial reference system, by a home automation device comprising:
- at least one movement detector (20) comprising:
• a housing (22) adapted to be securable to the wing,
• an accelerometer (24) fixed to the housing and adapted to provide signals, named acceleration signals, representative of the acceleration of the housing along at least one fixed direction of the housing relative to the frame,
• a magnetometer (25) fixed to the housing and adapted to provide signals, named orientation signals, representative of the instantaneous orientation of at least one fixed direction of the housing relative to an Earth's local magnetic field,
- a processing unit (21) for processing the signals provided by the accelerometer and by the magnetometer,
- a predetermined orientation value, named reference orientation, of the housing relative to the Earth's local magnetic field is stored,
said method being **characterised in that**:
- the acceleration signals at least are processed by the processing unit, the processing unit being adapted to be able to identify a predetermined event, named reference event, from said acceleration signals,
- on detection of a reference event, the instantaneous orientation of the housing is stored as a reference orientation.

10. Method according to Claim 9, in which the processing unit (21) generates messages representative of the orientation of the wing (30, 31), which are transmitted wirelessly by said movement detector (20).
